# EUROPÄISCHE PATENTSCHRIFT

(11) **EP 2 055 451 B1**
(45) Veröffentlichungstag und Bekanntmachung des Hinweises auf die Patenterteilung: **15.06.2011**
(21) Anmeldenummer: 08450153.5
(22) Anmeldetag: 09.10.2008
(51) Int. Cl.: B26D 7/18, B26F 1/38, B29C 70/00, B26D 7/08

(54) **Verfahren zum Herstellen eines Zuschnitts aus einem kunststoffgebundenen Fasergelege**
Method for manufacturing a blank from a plastic-bound fibre mat
Procédé destiné à la fabrication d'une section à partir d'une matière fibreuse liée par de la matière plastique

(30) Priorität: 29.10.2007 AT 17452007
(43) Veröffentlichungstag der Anmeldung: 06.05.2009
(73) Patentinhaber: GFM GmbH, 4403 Steyr (AT)
(72) Erfinder: Heidlmayer, Franz, Ing., 4502 St. Marien (AT)
(74) Vertreter: Hübscher, Helmut

(56) Entgegenhaltungen:
- AT-U1- 6 638
- FR-A- 359 613
- US-A1- 2006 213 343

## Beschreibung

Die Erfindung bezieht sich auf ein Verfahren zum Herstellen eines Zuschnitts aus einem kunststoffgebundenen Fasergelege, wobei das Fasergelege mit Hilfe eines entlang des Umrisses des Zuschnitts geführten Messers durchtrennt und aus dem verbleibenden Restgelege herausgehoben wird.

Das Bereitstellen von Zuschnitten aus kunststoffgebundenen Fasergelegen macht Schwierigkeiten, weil nach dem Ausschneiden der Zuschnitte aus einem Fasergelege, insbesondere bei dickeren, mehrlagigen Gelegen beispielsweise aus Kohlenstofffasern, erhebliche Kräfte erforderlich werden, um die Zuschnitte aus dem Restgelege herausheben zu können. In diesem Zusammenhang ist zu bedenken, dass bei einem üblichen Messerschnitt eine gewisse Verhakung der geschnittenen Faserenden über die Schnittfuge hinweg unvermeidbar ist, was zu einer Verkrallung zwischen den Schnitträndem Anlass gibt. Außerdem ist bei einer vor allem bei dickeren Fasergelegen empfehlenswerten Schwingungsanregung der Messer mit Ultraschall damit zu rechnen, dass der Kunststoff des Bindemittels örtlich erweicht wird und Haftbrücken zwischen dem Zuschnitt und dem Restgelege bildet. All diese Umstände führen dazu, dass die aus einem Fasergelege ausgeschnittenen Zuschnitte in mühsamer Handarbeit aus dem Restgelege gelöst werden müssen, bevor sie vom Restgelege mit herkömmlichen Greif- oder Saugeinrichtungen für die Weiterverarbeitung aufgenommen und weggefördert werden können.

Um Formteile mit einem flächigen Dekormaterial ohne Nachbehandlung der Randbereiche sowohl am äußeren Umfang als auch an Durchbrüchen und Aussparungen innerhalb des Formteils herstellen zu können, ist es bekannt (DE 43 17 235 A1), das Dekormaterial in einem Vorformwerkzeug zwischen zwei Formwerkzeugen einzuspannen, die Stanzwerkzeuge zum Ausstanzen der Umrisse, Durchbrüche und Aussparungen aufweist, sodass nach der Vorformung und dem Ausstanzen des Dekormaterials dieses mit Hilfe des oberen Formwerkzeuges in eine Spritzgießform übergeben werden kann, um mit einem thermoplastischem Material hinterspritzt zu werden. Da beim Ausstanzen des Dekormaterials die abgetrennten Reste mit Hilfe der Stanzstempel beim Trennvorgang vom zugeschnittenen Dekormaterial abgesenkt bzw. angehoben werden, kann ein solches Verfahren keine Lehre zum Ausheben eines Zuschnitts aus dem Restgelege geben.

Schließlich ist es bekannt (GB 2 261 839 A), die Auskleidung beispielsweise eines Fahrzeugdaches mit Hilfe von zwei parallelen Schnitten zu beschneiden, um Vorspannungen der elastischen Schicht der aus einem Trägermaterial und der elastischen Schicht bestehenden Auskleidung berücksichtigen zu können. Mit Hilfe eines von der geforderten Umrisslinie entfernteren Messers, das gegenüber dem für die eigentliche Umrissform vorgesehenen Messer gegen die auf einem Formkörper aufruhende Auskleidung vorsteht, wird auf die elastische Schicht eine Zugspannung quer zur Schnittrichtung ausgeübt, die für den Besäumungsschnitt solche Bespannungsbedingungen schafft, dass die elastische Schicht sich nicht gegenüber der Schnittfläche des Trägermaterials zurückzieht. Bei kunststoffgebundenen Fasergelegen tritt dieses Problem jedoch nicht auf.

Schließlich ist es zum Ausschneiden eines Zuschnitts aus einer textilen Warenbahn zum Herstellen von Werkstücken aus einem Faser-Kunststoffverbund bekannt (AT 006 638 U1), die in einer vorgegebenen Förderrichtung schrittweise förderbare Warenbahn in Längsabschnitten bezüglich der Förderrichtung abschnittsweise einerseits ausschließlich innerhalb des Zuschnittbereichs abzunähen sowie anderseits zu schneiden und nach jedem abschnittsweisen Näh- und Schneidvorgang um einen Förderschritt entsprechend der Abschnittslänge weiterzufördern. Abgesehen von der dadurch ermöglichten abschnittsweisen Bearbeitung des Zuschnitts auf einem im Vergleich zur Länge der Warenbahn kurzen Bearbeitungstisch wird aufgrund der dem Umrissverlauf auf der Innenseite des Zuschnitts folgenden Naht ein Ausfransen der Schnittkanten verhindert, sodass eine große Ausschnittsgenauigkeit erreicht werden kann. Die Warenbahn wird aufgrund des schrittweisen Vorschubs über den Bearbeitungstisch gezogen, was ein Herausheben des Zuschnitts aus dem Restgelege ausschließt.

Der Erfindung liegt somit die Aufgabe zugrunde, ein Verfahren der eingangs geschilderten Art zum Herstellen von Zuschnitten aus einem kunststoffgebundenen Fasergelege so auszugestalten, dass die Zuschnitte mit herkömmlichen Greif- oder Saugeinrichtungen aus dem Restgelege herausgehoben werden können.

Die Erfindung löst die gestellte Aufgabe dadurch, dass vor dem Herausheben des Zuschnitts aus dem Restgelege die Trennfuge zwischen dem Zuschnitt und dem Restgelege durch ein Entfernen eines Gelegestreifens verbreitert wird.

Die Erfindung geht von der Erkenntnis aus, dass das Herausheben eines ausgeschnittenen Zuschnitts aus dem verbleibenden Restgelege dann keine Schwierigkeiten mit sich bringt, wenn Kraft- und Formschlüsse zwischen dem ausgeschnittenen Zuschnitt und dem Restgelege unterbunden werden. Dies kann in einfacher Weise durch eine entsprechend weite Trennfuge sichergestellt werden. Eine solche verbreiterte Trennfuge bedingt aber die zusätzliche Entfernung eines Gelegestreifens. Da es dabei nicht auf eine unversehrte Entnahme des Gelegestreifens ankommt, ist die Entnahme des Gelegestreifens zur Verbreiterung der Trennfuge mit Hilfe eines entsprechenden Werkzeuges vergleichsweise einfach und durchaus einer Automatisierung zugänglich.

Zur Entfernung des die Trennfuge verbreiternden Gelegestreifens könnte ein Fräskopf eingesetzt werden. Bessere Ergebnisse lassen sich jedoch im allgemeinen dann erzielen, wenn das Fasergelege durch zwei den Gelegestreifen zwischen sich begrenzende Schnitte zweifach durchtrennt wird, nämlich durch einen Schnitt entlang des Umrisses des Zuschnitts und einen diesem Umrissschnitt mit Abstand außerhalb des Zuschnitts folgenden Schnitt. Der auf diese Weise beidseitig durch Schnitte begrenzte Gelegestreifen kann dann mit Hilfe eines Stichel- oder eines Schälmessers ohne weiteres ausgehoben werden, wobei allenfalls vorhandene Haftbrücken zu den anschließenden Schnittflächen des Zuschnitts und des Restgeleges ohne besonderen Kraftaufwand aufgebrochen werden.

Die beiden Schnitte zur Verbreiterung der Trennfuge zwischen Zuschnitt und Restgelege können in einem Arbeitsgang durchgeführt werden, was einen entsprechend aufwändigen Messerkopf erfordert. Um mit herkömmlichen Schneideinrichtungen zum Ausschneiden von Zuschnitten aus einem Fasergelege das Auslangen zu finden, können die beiden Schnitte auch nacheinander vorgenommen werden.

Da unter Umständen damit gerechnet werden muss, dass durch das Entnehmen eines Gelegestreifens die Schnittfläche des Zuschnitts beeinträchtigt wird, kann nach dem Entfernen des Gewebestreifens und vor dem Herausheben des Zuschnitts aus dem Restgelege die Umrisslinie des Zuschnitts mit dem Vorteil nachgeschnitten werden, dass der Zuschnitt keiner neuerlichen Positionierung bedarf und die bereits für die Steuerung des Umrissschnitts verfügbaren Steuerdaten für den Nachschnitt verwendet werden können.

Anhand der Zeichnung wird das erfindungsgemäße Verfahren näher erläutert. Es zeigen
- Fig. 1: ein Fasergelege mit einem ausgeschnittenen Zuschnitt nach einem teil- weise durchgeführten zweiten Schnitt außerhalb des Zuschnitts zur Ver- breiterung der Trennfuge in einer Draufsicht,
- Fig. 2: einen Schnitt nach der Linie II-II der Fig. 1 in einem größeren Maßstab und
- Fig. 3: einen entlang der Trennfuge geführten Schnitt im Bereich eines Werk- zeugs zum Entfernen des Gelegestreifens ebenfalls in einem größeren Maßstab.

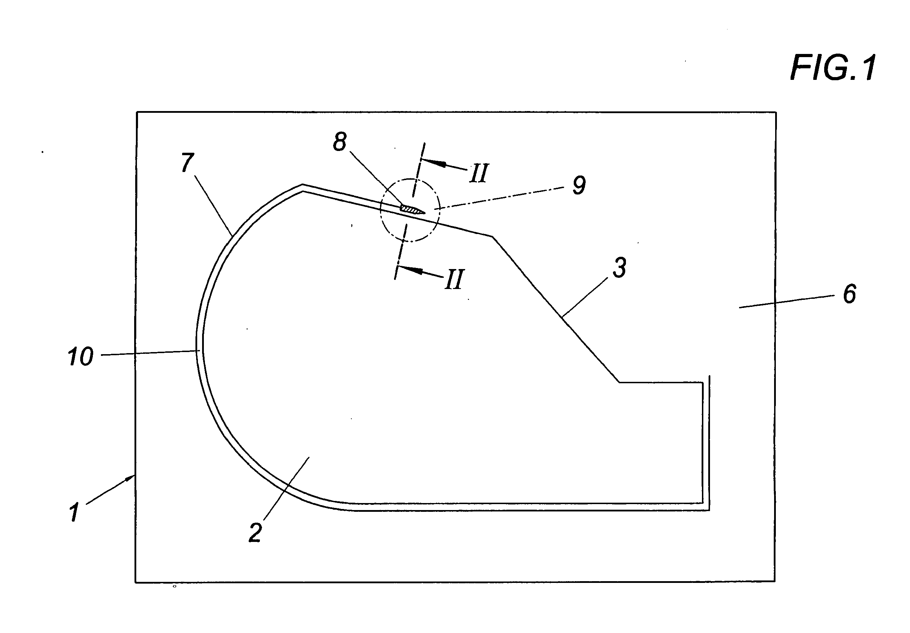

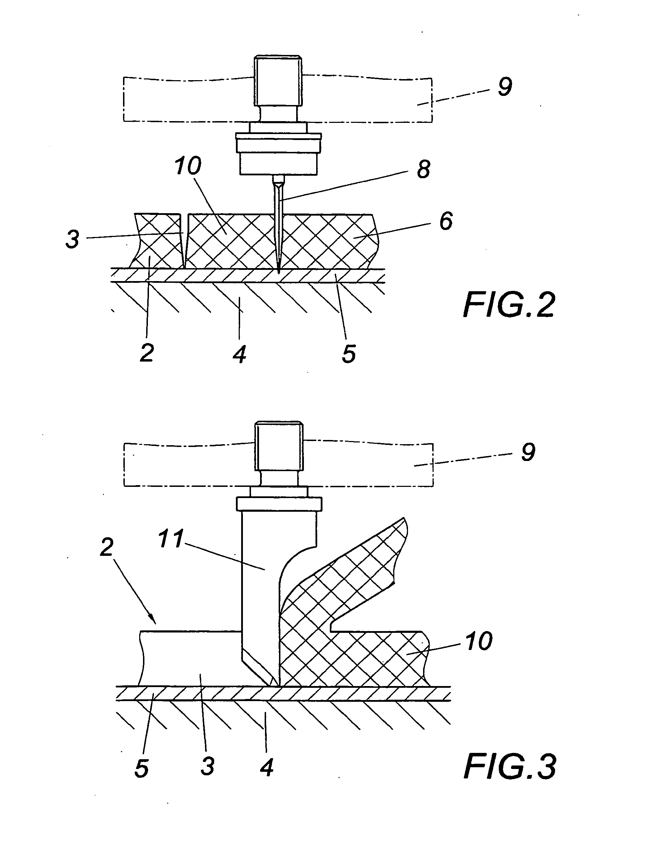

Gemäß der Fig. 1 wurde aus einem kunststoffgebundenen Fasergelege 1 beispielsweise aus Kohlenstofffasern ein Zuschnitt 2 ausgeschnitten. Der entlang des Umrisses des Zuschnitts 2 geführte Schnitt ist mit 3 bezeichnet. Um den Zuschnitt 2 mit einem üblichen Greif- oder Saugwerkzeug vom Schneidtisch 4, der in den Fig. 2 und 3 angedeutet und mit einer Schneidauflage 5 versehen ist, abheben und aus dem Restgelege 6 lösen zu können, wird mit Abstand außerhalb des Zuschnitts 2 ein dem Umrissschnitt 3 folgender weiterer Schnitt 7 geführt, und zwar vorzugsweise mit dem selben Messer 8, das auch für den Umrissschnitt 3 eingesetzt wurde und zur Unterstützung des Schneidvorgangs mit Ultraschall beaufschlagt werden kann. Dieses auswechselbar in einem Schneidkopf 9 eingesetzte Messer 8 erfährt seinen Vorschub beispielsweise durch einen in zwei zum Schneidtisch 4 parallelen Achsen verfahrbaren Schlitten, in dem der Schneidkopf 9 um eine zum Schneidtisch senkrechte Achse drehbar gelagert ist, sodass das Messer 8 bei einer entsprechenden Ansteuerung des Schlittens und des Antriebs für die Drehverstellung des Schneidkopfes 9 parallel zum Umrissschnitt 3 bewegt werden kann, um im Anschluss an den Zuschnitt 2 vom Restgelege 6 einen Gelegestreifen 10 abzutrennen, wie dies aus den Fig. 1 und 2 ersichtlich wird.

Der durch zwei Schnitte 3 und 7 begrenzte Gelegestreifen 10 ist vor dem Herausheben des Zuschnitts 2 zu entfernen. Zu diesem Zweck wird gemäß der Fig. 3 ein Stichel- oder Schälmesser 11 eingesetzt, das zwischen den beiden Schnitten 3 und 7 in das Fasergelege eingreift und den Gelegestreifen 10 vom Schneidtisch 4 abhebt, sodass sich nach der Entfernung des Gelegestreifens . 10 eine der Breite des Gewebestreifens 10 entsprechend breite Trennfuge zwischen dem Zuschnitt 2 und dem Restgelege 6 ergibt. Durch diese Trennfuge wird sichergestellt, dass der Zuschnitt 2 unbehindert durch das Restgelege 6 vom Schneidtisch 4 abgehoben werden kann. Die Verbreiterung der Trennfuge zwischen dem Zuschnitt 2 und dem Restgelege 6 durch die Entnahme eines Gelegestreifens 10 im Anschluss an den Zuschnitt 2 setzt keinen ins Gewicht fallenden Gerätemehraufwand voraus, weil mit herkömmlichen Schneideinrichtungen das Auslangen gefunden werden kann, und zwar auch für das Entnehmen des Gelegestreifens 10, was ja lediglich den Einsatz eines geeigneten Schälmessers oder Stichels im Messerkopf 9 erfordert. Sollen die beiden den Gelegestreifen 10 begrenzenden Schnitte 3 und 7 nicht nacheinander, sondern zugleich in einem Arbeitsgang ausgeführt werden, so ist allerdings ein Messerkopf für zwei Messer erforderlich.

Um die Schnittqualität insbesondere im Bereich des Umrissschnitts 3 zu verbessern, kann unter Umständen dem Messerkopf ein Niederhalter zugeordnet werden. Für besonders hohe Anforderungen an die Schnittflächen des Zuschnitts 2 kann der Zuschnitt 2 nach dem Entfernen des Gelegestreifens 10 nachgeschnitten werden, bevor der Zuschnitt zur Weiterverarbeitung von einem Greif- oder Saugwerkzeug erfasst und vom Schneidtisch 4 abgehoben wird.

## Patentansprüche

1. Verfahren zum Herstellen eines Zuschnitts (2) aus einem kunststoffgebundenen Fasergelege (1), wobei das Fasergelege (1) mit Hilfe eines entlang des Umrisses des Zuschnitts (2) geführten Messers durchtrennt und aus dem verbleibenden Restgelege (6) herausgehoben wird, **dadurch gekennzeichnet, dass** vor dem Herausheben des Zuschnitts (2) aus dem Restgelege (6) die Trennfuge zwischen dem Zuschnitt (2) und dem Restgelege (6) durch ein Entfernen eines Gelegestreifens (10) verbreitert wird.

2. Verfahren nach Anspruch 1, **dadurch gekennzeichnet, dass** das Fasergelege (1) durch zwei den Gelegestreifen (10) zwischen sich begrenzende Schnitte (3, 7) zweifach durchtrennt wird, nämlich durch einen Schnitt (3) entlang des Umrisses des Zuschnitts (2) und einen diesem Umrissschnitt (3) mit Abstand außerhalb des Zuschnitts (2) folgenden Schnitt (7), wobei die beiden Schnitte (3, 7) nacheinander durchgeführt werden.

3. Verfahren nach Anspruch 1 oder 2, **dadurch gekennzeichnet, dass** nach dem Entfernen des Gewebestreifens (10) und vor dem Herausheben des Zuschnitts (2) aus dem Restgelege (6) die Umrisslinie des Zuschnitts (2) nachgeschnitten wird.

## Claims

1. Method of producing a blank (2) from a synthetic material-bonded fibre non-crimp fabric (1), wherein the fibre non-crimp fabric (1) is cut with the aid of a cutter guided along the outline of the blank (2) and is lifted out of the remaining non-crimp fabric (6), **characterised in that** prior to lifting the blank (2) out of the remaining non-crimp fabric (6) the separation joint between the blank (2) and the remaining non-crimp fabric (6) is widened by removing a non-crimp fabric strip (10).

2. Method as claimed in claim 1, **characterised in that** the fibre non-crimp fabric (1) is cut twice by means of two cuts (3, 7) which define the non-crimp fabric strip (10) therebetween, namely by means of a cut (3) along the outline of the blank (2) and a cut (7) which follows this outline cut (3) at a spaced interval outside the blank (2), wherein the two cuts (3, 7) are performed in succession.

3. Method as claimed in claim 1 or 2, **characterised in that** after the woven fabric strip (10) has been removed and before the blank (2) has been lifted out of the remaining non-crimp fabric (6) the contour of the blank (2) is trimmed.

## Revendications

1. Procédé destiné à la fabrication d'une découpe (2) à partir d'une nappe fibreuse (1) liée par de la matière synthétique, la nappe fibreuse (1) étant séparée à l'aide d'un couteau guidé le long du contour de la découpe (2) et détachée de la nappe résiduelle (6) subsistant, **caractérisé en ce que**, avant le détachement de la découpe (2) vis-à-vis de la nappe résiduelle (6), le joint de séparation entre la découpe (2) et la nappe résiduelle (6) est élargi par un enlèvement d'une bande de tissu (10).

2. Procédé selon la revendication 1, **caractérisé en ce que** la nappe fibreuse (1) est séparée doublement, par deux découpes (3, 7) délimitant entre elles la bande de tissu (10), précisément par une découpe (3) faite le long du contour de la découpe (2) et une découpe (7), suivant cette découpe de contour (3), à distance extérieurement à la découpe (2), les deux découpes (3, 7) étant effectuées l'une après l'autre.

3. Procédé selon la revendication 1 ou 2, **caractérisé en ce que** la ligne de contour de la découpe (2) est redécoupée après l'enlèvement de la bande de tissu (10) et avant le détachement de la découpe (2) vis-à-vis de la nappe résiduelle (6).
